# NEUE EUROPÄISCHE PATENTSCHRIFT

(11) **EP 2 184 221 B2**
(45) Veröffentlichungstag und Bekanntmachung des Hinweises auf die Entscheidung über den Einspruch: **14.09.2016**
(45) Hinweis auf die Patenterteilung: 30.05.2012
(21) Anmeldenummer: 08168754.3
(22) Anmeldetag: 10.11.2008
(51) Int. Cl.: B62D 33/02, B60P 7/15

(54) **Lattenhalterung für Nutzfahrzeugaufbauten**
Bar holder for commercial vehicle trailers
Support de lattes pour montages de véhicule utilitaire

(43) Veröffentlichungstag der Anmeldung: 12.05.2010
(73) Patentinhaber: F. HESTERBERG & SÖHNE GmbH & Co. KG, 58256 Ennepetal (DE)
(72) Erfinder: Klein, Claus-Jürgen, 58332 Schwelm (DE); Tiedtke, Henning, 58256 Ennepetal (DE); Feldmeier, Frank, 58093 Hagen (DE); Feinbier, Joachim, 58256 Ennepetal (DE)
(74) Vertreter: Christophersen, Ulrich Rudolf

(56) Entgegenhaltungen:
- EP-A- 0 263 009
- EP-A- 1 145 938
- DE-B3-102006 004 994
- DE-U1-202004 014 744
- DE-U1-202007 001 329
- GB-A- 1 209 255

## Beschreibung

Die Erfindung betrifft eine Lattenhalterung für Nutzfahrzeugaufbauten mit einer das Ende einer Latte aufnehmenden, nach oben hin offenen Tragschale bestehend zumindest aus einem Boden, nach fahrzeuginnen und fahrzeugaußen weisenden Seitenwänden sowie einer der Stirnfläche der Latte gegenüberliegenden, gegen eine vertikale Profilstütze des Fahrzeugaufbaus vernietete oder verschraubte Befestigungswand, wobei sich die Schraube bzw. das Niet gegen eine Stützfläche innen an der Befestigungswand abstützt.

Bei Nutzfahrzeugaufbauten deren Laderaum durch Planen abgedeckt ist, ist eine hinreichende Abstützung der vor allem zu den Fahrzeugseiten hin großflächigen Planen erforderlich. Hierzu sind, wie z. B. aus der DE 43 21 516 C1 bekannt, zwischen den vertikalen Rungen des Nutzfahrzeugaufbaus in verschiedenen Höhen herausnehmbare Latten angeordnet. Diese werden häufig auch als Planlatten bezeichnet. Zur Lattenhalterung sind seitlich an den Rungen Tragschalen befestigt, in denen sich die Enden der Latten infolge deren Eigengewichts abstützen. Zum Einsetzen und Herausnehmen der Planlatten, was regelmäßig im Rahmen des Fahrzeugbe- und entladens erforderlich ist, werden die Latten in möglichst horizontaler Ausrichtung in die Tragschalen abgesenkt bzw. daraus angehoben. Dies bereitet in der Praxis oft Schwierigkeiten, da die Enden der Latten dazu neigen, sich in den Tragschalen zu verhaken. Verhindern ließe sich dies zwar durch ein Absenken bzw. Anheben der Latte in exakt horizontaler Ausrichtung, was aber in der Praxis, da häufig nur eine Person diese Arbeiten ausführt, schwierig ist. Sobald die Planlattejedoch nuretwas schräg steht, kommt es bereits zu einem Verhaken der Lattenenden in den Tragschalen. Diese Problematik zeigt sich auch bei der in der DE 20 2007 001329 U1 beschriebenen Lattenhalterung, welche im Kantenbereich zwischen Boden und Rückteil eine Öffnung aufweist, so dass sich die Latte an alle Innenflächen anlegen kann.

Keine geeignete Lösung für dieses Problem wäre es, die Latten einfach zu kürzen und so ihr Spiel in Längsrichtung zu vergrößern. Denn selbst wenn beide Enden dann noch sicher in den Lattenhalterungen aufgenommen wären, würde die Planlatte jedenfalls im Fahrbetrieb unerwünschte Längsbewegungen ausführen.

Die GB 1 209 255 zeigt eine Lattenhalterung mit einem Klemmmechanismus, bei der eine am Boden ausgebildete Stufe eine verkürzte Latte erzwingt. Von derLatte auf die Lattenhalterung einwirkende Kräfte, beispielsweise bei einer abrupten Bremsung, werden nur im vertikalen Bereich dieser Stufe und damit auf sehr geringer Fläche aufgenommen. Außerdem kann es bei nicht sachgemäßem Einsetzen der Latte dazu kommen, dass diese mit ihrem einen Ende oben auf der Stufe aufsitzt, womit die Latte ungewollt in eine schräge Lage gelangt.

Zur Lösung vorgeschlagen wird eine Lattenhalterung für Nutzfahrzeugaufbauten mit den Merkmalen des Anspruchs 1.

Dieser Vorschlag beruht auf der Erkenntnis, dass bei herkömmlichen Lattenhalterungen das häufige Verklemmen und Verkanten der Planlatten beim Einsetzen und Herausnehmen auf die in dieTragschalen hinein ragenden Nietköpfe der Nietbefestigung der Tragschale zurückzuführen ist. An den Nietköpfen verhaken sich, sofern die Planlatte nicht exakt horizontal eingesetzt und herausgenommen wird, die Stirnflächen der Latten. In diesem Zusammenhang ist zu berücksichtigen, dass Planlatten häufig einfache Holzlatten sind, deren Stirnflächen nach häufigem Gebrauch eine sehr raue Oberfläche aufweisen, was die Neigung der Latten zum Verklemmen oder Verkanten beim Ansenken und Herausheben zusätzlich fördert. Häufig werden auch stirnseitig offene Aluminiumprofile als Planlatten verwendet. Auch diese neigen wegen ihreroffenen Stirnseite zum Verkanten.

Dies lässt sich wirkungsvoll verhindern, indem zwischen den beiden Seitenwänden der Tragschale eine Führungsfläche angeordnet wird, welche der Stirnfläche der Latte gegenüberliegt und welche im Vergleich zu jener Stützfläche, an der sich das Niet oder auch eine technisch vergleichbare Schraube abstützt, zu der Stirnfläche der Latte hin vorspringt. Durch diese Maßnahme kommt das Lattenende nur mit der glattflächigen Führungsfläche in Kontakt, und nicht mit vorspringenden Teilen der Lattenhalterung wie insbesondere den Niet- oder Schraubenköpfen. Um diesen Effekt zu erzielen, muss sich die Führungsfläche zwar nicht durchgehend über die gesamte Höhe der Tragschale erstrecken, sie muss sich jedoch zumindest in Höhe des Niets bzw. der Schraube oder auch höher befinden, damit beim Absenken der Planlatte deren erster Kontakt mit der Führungsfläche erfolgt, und nicht mit dem Niet- oder Schraubenkopf.

Bevorzugte Ausgestaltungen einer erfindungsgemäßen Lattenhalterung sind in den Unteransprüchen angegeben.

Es wird die in der Praxis bewährte Bauweise derTragschale beibehalten, bei der diese aus einem einstückigen Blechformteil besteht, welches durch entsprechende Umformung zur Tragschale wird. Insofern muss es das Ziel sein, auch die erfinduhgsgemäßen Führungsflächen unmittelbar an diesem Blechformteil durch entsprechende Umformung gleich mit auszubilden. Da die erfindungsgemäßen Führungsflächen das jeweilige Ende der Latte über einen gewissen Höhenbereich führen sollen, bietet sich zur Ausbildung der Führungsflächen der Ekkenbereich zwischen der Befestigungswand und einer der beiden Seitenwände der Tragschale an. Die Gestaltung der Führungsfläche in diesem Eckenbereich vermindert jedoch die Breite der Aufstandsfläche der Tragschale an der vertikalen Profilstütze des Fahrzeugaufbaus. Um die volle Aufstandsbreite beizubehalten, ist eine Aufteilung der Führungsfläche von Vorteil, indem mindestens eine Teilfläche der Führungsfläche zwischen der Schraube bzw. dem Niet und der fahrzeuginneren Seitenwand, und mindestens eine weitere Teilfläche zwischen der Schraube bzw. dem Niet und derfahrzeugäußeren Seitenwand angeordnet ist. Auf diese Weise bleiben Bereiche bestehen, in denen sich die Tragschale auf voller Breite an dervertikalen Profilstütze, z. B. einer Runge des Fahrzeugaufbaus, abstützt.

Hinsichtlich Fertigungskosten und Stabilität besonders günstig ist eine Ausführungsform, bei der sich die erfindungsgemäße Führungsfläche aus insgesamt drei Teilflächen zusammensetzt, von denen sich die erste Teilfläche entlang der einen Seitenwand, und die zweite und dritte Teilfläche entlang der zweiten Seitenwand erstrecken, wobei sich die zweite Teilfläche überwiegend in einer Höhe oberhalb, und die dritte Teilfläche überwiegend in einer Höhe unterhalb der Höhe der ersten Teilfläche befindet.

Bei dieser Ausführungsform steht über die gesamte Höhe der Tragschale eine Führung zur Verfügung und es gibt keinen Höhenabschnitt, auf dem es mangels einer solchen Führung zu einem Verhaken oder Verkanten des Lattenendes kommen könnte. Allerdings verteilt sich die Führungsfläche auf drei getrennte Teilflächen, die so angeordnet sind, dass sich in vertikaler Richtung eine ununterbrochene Führung einstellt. Der Vorteil dieser Lösung besteht wiederum in der preiswerten Herstellbarkeit durch einfaches Umformen des Blechformteils, verbunden mit dem Vorteil der vollen Aufstandsbreite der Tragschale an der vertikalen Profilstütze. Die Aufteilung der Führungsfläche kann auch auf mehr als drei getrennte Teilflächen erfolgen, etwa auf vier oder mehr getrennte Teilflächen.

Weitere Einzelheiten und Vorteile werden im Folgenden anhand verschiedener, auf der Zeichnung dargestellter Ausführungsbeispiele beschrieben. Von diesen Zesgen die Figuren 10 - 15 Keine Ausführungsformen gemäß der Erfindung. Auf der Zeichnung zeigen:
- Fig. 1: in einer Seitenansicht ein Nutzfahrzeug, dessen Fahrzeugaufbau aus vertikalen Rungen und dazwischen in unterschiedlichen Höhen angeordneten Planlatten zusammengesetzt ist;
- Fig. 2: in perspektivischer Darstellung das Einsetzen eines Endes der Planlatte in eine an der Runge angeordnete Lattenhalterung, wobei eine Tragschale der Lattenhalterung gemäß dem Stand der Technik gestaltet Ist,
- Fig. 3: eine Runge mit Planlattenhalterungen in perspektivischer Darstellung;
- Fig. 4: eine Detailansicht einer Runge mit links und rechts daran befestigten Tragschalen;
- Fig. 5: eine gegenüber Fig. 4 um 90° verdrehte Ansicht auf Runge und Tragschale;
- Fig. 6: einen Horizontalschnitt durch die Runge gemäß der in Fig. 4 eingezeichneten Schnittebene VI-VI;
- Fig. 7: eine perspektivische Einzeldarstellung der Tragschale nach den Figuren 4 bis 6;
- Fig. 8: eine zweite Ausführungsform einer Tragschale in perspektivischer Darstellung, wobei eine Seitenwand weggebrochen dargestellt ist,
- Fig. 9: die Tragschale nach Fig. 8 in einer anderen Perspektive;
- Fig. 10: eine dritte Ausführungsform einer Tragschale in einer Ansicht;
- Fig. 11: die Tragschale nach Fig. 10 in einer Schnittdarstellung ;
- Fig. 12: eine vierte Ausführungsform einerTragschale in einer Ansicht;
- Fig. 13: die Tragschale nach Fig. 12 in einer Schnittdarstellung;
- Fig. 14: eine fünfte Ausführungsform einer Tragschale in einer Ansicht und
- Fig. 15: die Tragschale nach Fig. 14 in einer Schnittdarstellung.

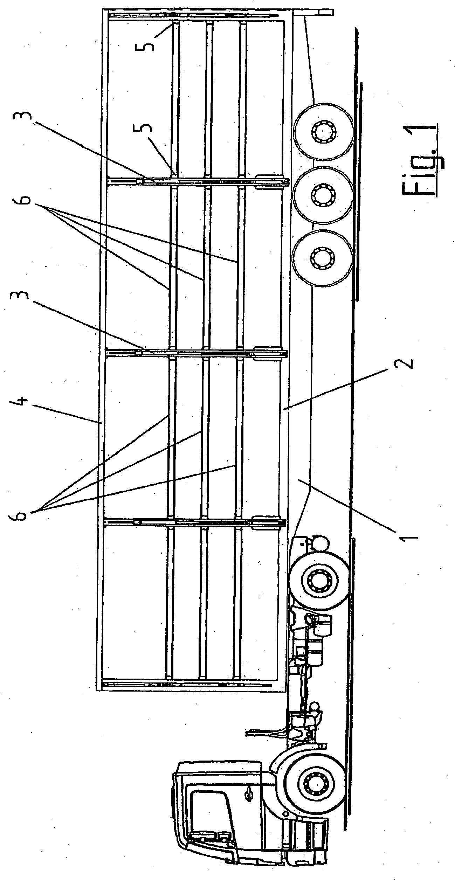

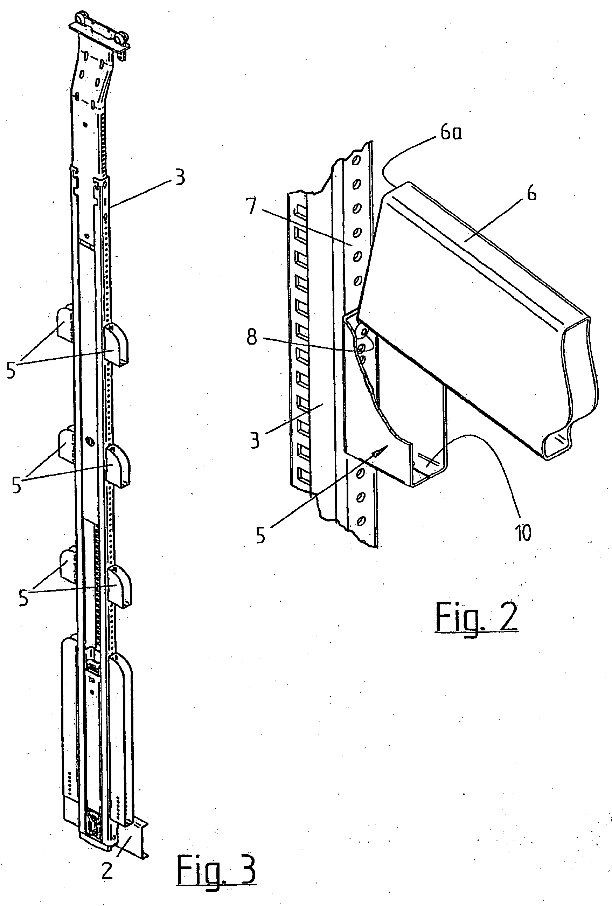

Die Fig. 1 zeigt ein Nutzfahrzeug, hier einen Sattelauflieger, mit dem Fahrzeugchassis 1, dem Ladeboden 2 und den sich vom Ladeboden 2 vertikal nach oben erstreckenden Profilstützen 3, die auch als Rungen bezeichnet werden. Eine solche Runge ist in Fig. 3 dargestellt. Sie ist an ihrem unteren Ende gegen den Ladeboden 2 verriegelbar. An ihrem oberen Ende kann die Runge 3 entlang des Dachaufbaus 4 längsgeführt sein, um zum Be- und Entladen eine vergrößerte seitliche Ladeöffnung im Nutzfahrzeugaufbau zu schaffen. An den Profilstützen 3 sind in verschiedenen Höhen Tragschalen 5 befestigt. In der Praxis erfolgt diese Befestigung durch Vernieten der jeweiligen Tragschale 5 mit einer Seitenfläche der Runge.

Bei dem in Fig. 1 dargestellten Fahrzeug sind die Mittelrungen 3 sowohl an ihrerfahrzeugvorderen, wie an Ihrer fahrzeughinteren Seite jeweils mit derartigen Tragschalen 5 versehen. Hingegen ist die vorderste Runge wie auch die hinterste Rungen nicht mit paarweisen Tragschalen, sondern in jeder Höhe nur mit einer Tragschale 5 versehen. Infolge dieser Anordnung der Tragschalen 5 lässt sich in jeweils zwei Tragschalen eine horizontale Latte 6 einsetzen. Derartige Latten 6 werden auch als Planlatten bezeichnet, da sie unterstützend auf die flexiblen Seitenplanen derartiger Fahrzeugaufbauten wirken.

In Fig. 2 ist eine Lattenhalterung nach dem Stand der Technik dargestellt. Die aus einem Blechformteil geformte Tragschale 5 ist an einer Seitenfläche 7 der Runge 3 befestigt, wobei diese Seitenfläche 7 ein Lochprofil sein kann, um auf diese Weise die Tragschale 5 bereits herstellerseitig wahlweise in unterschiedlichen Höhenpositionen befestigen zu können. Die Befestigung erfolgt in der Praxis durch Verschrauben oder Vernieten der Tragschale 5 an der Seitenfläche 7 der Profilstütze 3. Hierbei stehen die verwendeten Befestigungsmittel, also die Schrauben bzw. Niete, etwas in die Tragschale 5 vor. Dadurch kann die Stirnfläche 6a der Latte 6 beim Einsetzen, wie dies in Fig. 2 dargestellt ist, an diesen Befestigungsmitteln verhaken. Dies passiert vor allem dann wenn, wie ebenfalls in Fig. 2 dargestellt, das Ende der Latte nicht exakt horizontal, sondern leicht verkantet in die Tragschale 5 abgesenkt wird. Auch beim Herausheben der Latte 6 kann es zu einem Verhaken der Stirnfläche 6a an den hier durch die Köpfe 8 der Niete gebildeten Vorsprüngen kommen.

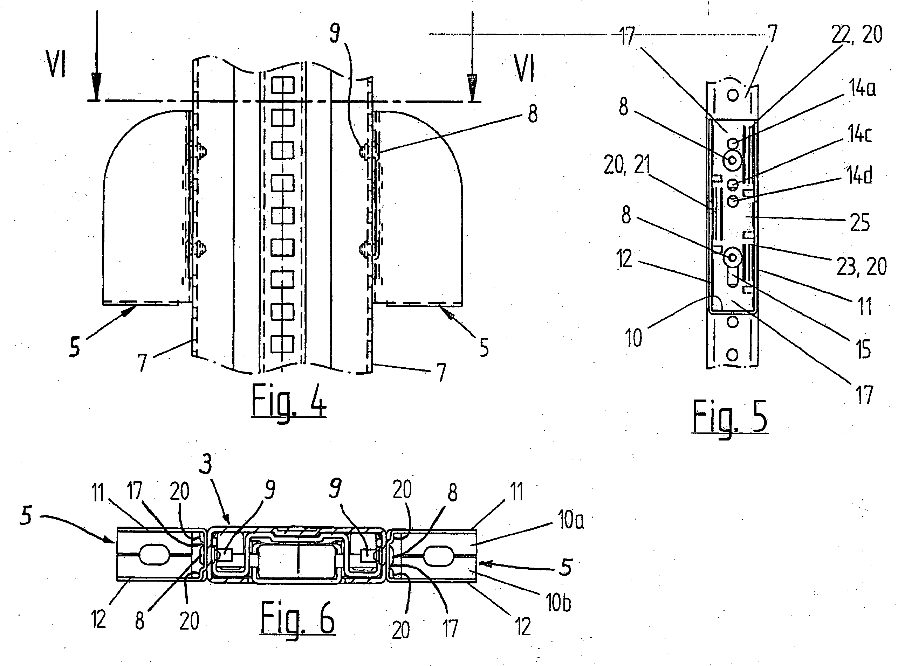

Dies lässt sich durch den Einsatz einer Tragschale, wie sie im Folgenden anhand der Figuren 4 bis 7 beschrieben wird, vermeiden. Der Grundaufbau dieser Tragschale 5 ist größtenteils herkömmlich, d. h. sie setzt sich zusammen aus einem Boden 10, auf dem die Latte unter ihrem Eigengewicht aufliegt, einer nach fahrzeuginnen weisenden ersten Seitenwand 11, einer nach fahrzeugaußen weisenden zweiten Seitenwand 12 sowie einer Befestigungswand 13, welche der Verbindung der Tragschale mit der Profilstütze bzw. Runge 3 dient. Insgesamt ist die Tragschale 5 daher aus vier Flächen bzw. Wänden 10, 11, 12, 13 zusammengesetzt. Dies erfolgt in fertigungstechnisch preiswerter Weise, indem die gesamte Tragschale 5 aus einem einzigen, d. h. einstükklgen Blechformteil durch Umformen, vor allem Biegen, hergestellt wird. Infolge des Biegeprozesses ergibt sich ein zweiteiliger Boden 10 mit Bodenhälften 10a, 10b, die in einem letzten Fertigungsschritt durch Punktschweißungen verbunden werden.

Abgestimmt auf das Lochraster in den Seitenflächen 7 der Profilstütze 3 ist auch die Befestigungswand 13 der Tragschale 5 mit einem Loch raster versehen. Dieses Lochraster kann insbesondere so gestaltet sein, dass sich eine feinere Höhenabstufung ergibt, als durch das Lochraster auf der Seitenfläche 7 eigentlich vorgegeben.

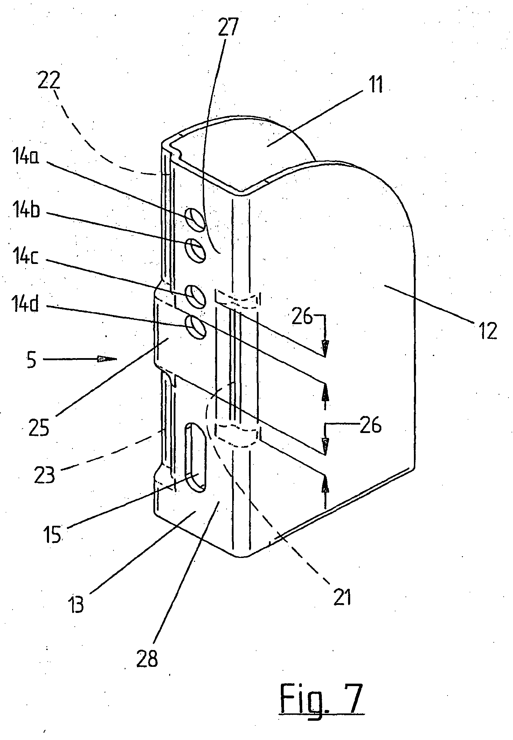

Bei der hier beschriebenen Ausführungsform besteht, wie die Figuren 5 und 7 erkennen lassen, das Lochraster In der Befestigungswand 13 aus vier runden Öffnungen 14a, 14b, 14c, 14d sowie einer länglichen Öffnung 15. Durch jede dieser Öffnungen 14a, 14b, 14c, 14d, 15 lässt sich ein Niet bzw. eine Schraube durchstecken um so die Tragschale in der gewünschten Höhe dauerhaft an der Runge 3 zu befestigen. Für eine ausreichende Befestigung sind pro Tragschale zwei Nieten oder zwei Schrauben erforderlich.

Derim Vergleich zur Größ eder Öffnungen 14a, 14b, 14c, 14d, 15 radial vergrößerte Kopf 8 des Niets 9 stützt sich unmittelbar an einer Stützfläche 17 ab. Die Stützfläche 17 ist hier der Bereich der Innenseite der Befestigungswand 13 rund um die jeweilige Öffnung 14a, 14b, 14c, 14d, 15 herum, durch die sich das Niet 9 erstreckt. Dies hat zwangsläufig zur Folge, dass der an der Stützfläche 17 anliegende Nietkopf 8 etwas in das Innere der Tragschale 5 vorsteht, und dort das bereits beschriebene Hindernis bildet. Der Grundgedanke der Erfindung ist es daher, dass nicht dieser Nietkopf 8 das am weitesten zu der Stirnfläche 6a (Fig. 2) der Latte hin vorspringende Bauteil ist, sondern dass eine Führungsfläche 20 vorgesehen ist, welche so weit zu der Stirnfläche 6a der Latte hin vorsteht, dass die Latte beim Einsetzen in die Tragschale Kontakt zu dieser Führungsfläche 20 hat, jedoch nicht oder kaum in Kontakt mit dem Nietkopf 8 gelangt.

Bei der Ausführungsform nach den Figuren 4 bis 6 wurde die Führungsfläche 20 durch zusätzliches Verformen des Blechmaterials gebildet, aus dem die Tragschale 5 besteht. Ergebnis dieser Verformung sind in die Tragschale 5 hinein sich erstreckende Winkel entlang der Ecken zwischen einerseits der ersten Seitenwand 11 und der Befestigungswand 13, und andererseits der zweiten Seitenwand 12 und der Befestigungswand 13. Bei dieser Ausführungsform sind insgesamt drei dieser Verformungsbereiche vorhanden, wobei zwei der Verformungsbereiche 22, 23 sich längs der Seitenwand 11, und ein Verformungsbereich 21 sich längs der Seitenwand 12 erstreckt. Die drei winkelförmigen Verformungen bilden, der Stirnfläche einer eingesetzten Latte gegenüberliegend, eine Führungsfläche, welche sich aus insgesamt drei Teilflächen 21, 22, 23 zusammensetzt (Fig. 5). Die erste Teilfläche 21 befindet sich in der einen Ecke und auf mittlerer Höhe der Befestigungswand 13. Hingegen befinden sich die zweite Teilfläche 22 sowie die dritte Teilfläche 23 beide in der anderen Ecke, außerdem sind sie durch einen Bereich 25 der Befestigungswand ohne Verformung voneinander getrennt. Gleichwohl ist, in vertikaler Richtung betrachtet, die Anordnung der Teilflächen 21, 22, 23 dergestalt, dass in jeder Höhe und damit unterbrechungslos zumindest eine der Teilflächen 21, 22, 23 vorhanden ist. Dies wird erreicht, indem sich die zweite Teilfläche 22 überwiegend in einer Höhe oberhalb, und die dritte Teilfläche 23 überwiegend in einer Höhe unterhalb der Höhe der ersten Teilfläche 21 befindet. Hierbei kommt es in den Höhenbereichen 26 zu einer Überlappung. Alle drei Flächen 21, 22, 23 liegen in derselben Ebene.

Wird daher eine Latte von oben her in diese Tragschale 5 eingeschoben, gleitet die Stirnfläche dieser Latte zunächst an derTeilfläche 22, sodann ohne Unterbrechung an der Teilfläche 21, und schließlich, wiederum ohne Unterbrechung an der unteren Teilfläche 23 entlang. In der Summe ergibt sich eine mehrteilige Führungsfläche 20, welche die Stirnfläche der Latte führt, wodurch es zu keinem Verhaken an den Nietköpfen 8 kommt. Denn, die aus Teilflächen zusammengesetzte Führungsfläche 20 ragt, wie Fig. 6 erkennen lässt, im Vergleich zu der Stützfläche 17 so weit zu der Stirnfläche der Latte hin vor, dass ein Kontakt der Latte nur mit der Führungsfläche 20, nicht mit dem Nietkopf 8 stattfindet.

Die mit der Ausführungsform nach den Figuren 4 bis 7 erzielte Aufteilung der Führungsfläche 20 führt dazu, dass außen an der Befestigungswand 13 nicht zurückspringende Bereiche 25,27,28 erhalten bleiben, wodurch sich die Befestigungswand 13 auf ganzer Breite und damit seitenstabil gegen die Runge 3 abstützt.

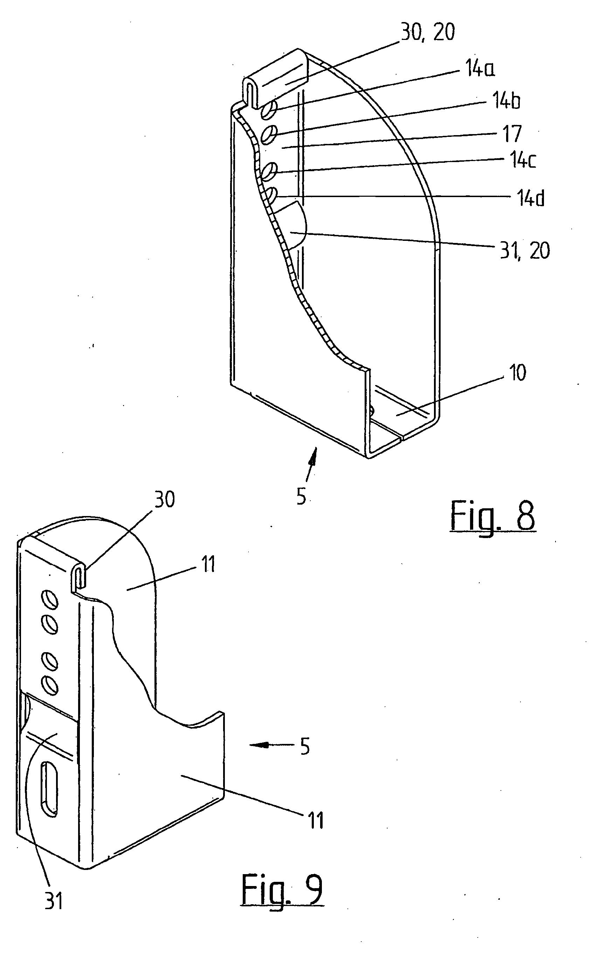

Bei der Ausführungsform nach den Figuren 8 und 9 befinden sich die gegenüber der Stützfläche 17 in Richtung auf die Latte vorspringenden Führungsflächen 20 an Verformungen 30, 31 der Befestigungswand 13 oberhalb sowie unterhalb der Öffnungen 14a, 14b, 14c, 14d für das Niet.

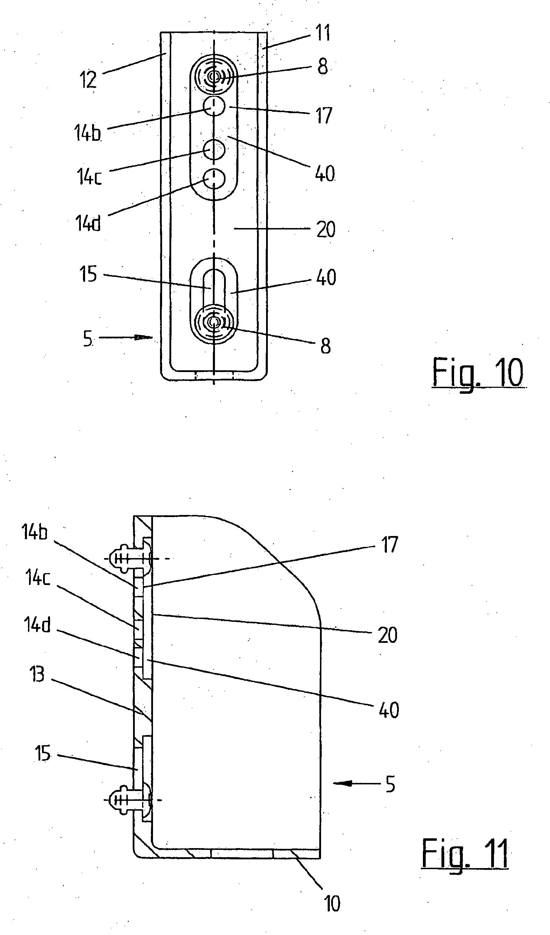

Bei der Ausührungsform nach den Figuren 10 und 11 ist die Tragschale 5 ein Giessteil aus Metall oder Kunststoff. Die Befestigungswand 13 weist bei dieser Ausführungsform partiell unterschiedliche Dicken auf. Im Bereich der Stützfläche 17 für die Anlage des Nietkopfs 8 ist die Wanddicke der Befestigungswand 13 geringer, in den übrigen Bereichen größer. Auf diese Weise sitzen die Nietköpfe 8 in Vertiefungen 40, wohingegen die erhabenen, näher zur Stirnfläche der Latte liegenden Bereiche die Führungsfläche 20 bilden.

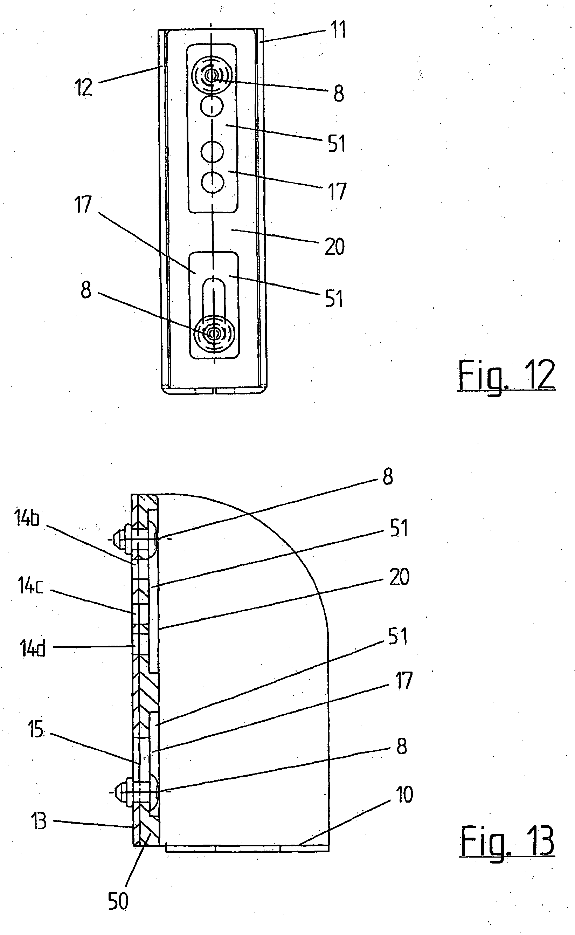

Bei der Ausführungsform nach den Figuren 12 und 13 ist die Führungsfläche 20 an einem innen an der Befestigungswänd 13 angeordneten flachen Einsatz 50 ausgebildet. Der Einsatz 50 ist mit zu den Öffnungen 14a, 14b, 14c, 14d, 15 in der Befestigungswand 13 fluchtenden Öffnungen versehen. An diese Öffnungen umgebenden Einsenkungen 51 des Einsatzes 50 ist die Stützfläche 17 für den Nietkopf 8 ausgebildet, wohingegen die erhabenen, d. h. näher der Stirnfläche der Latte zugewandten Bereiche des Einsatzes die Führungsfläche 20 bilden. Die Fixierung des zusätzlichen Einsatzes 50, der z. B. aus Kunststoff bestehen kann, erfolgt durch die beiden Niete.

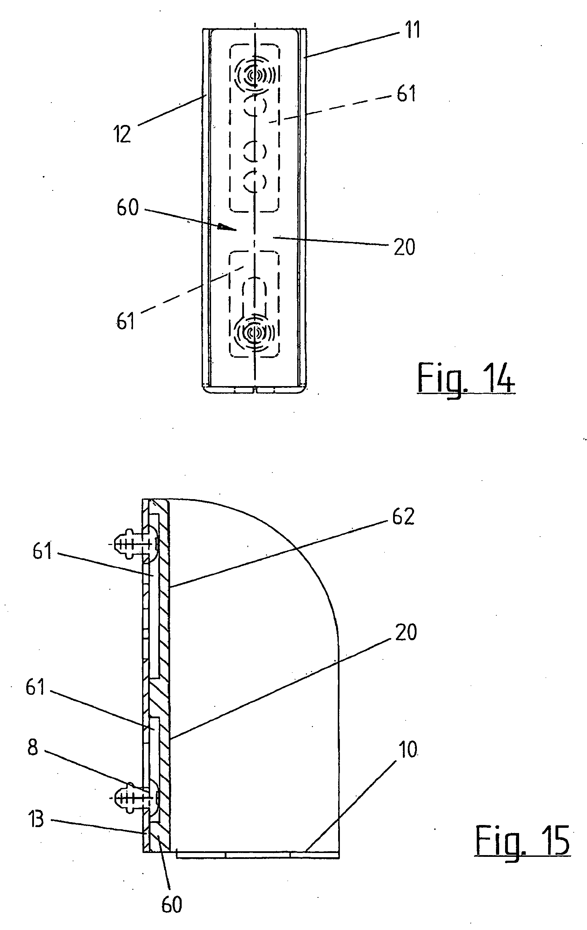

Bei der Ausführungsform nach den Figuren 14 und 15 ist ebenfalls ein Einsatz 60 von innen her gegen die Befestigungswand 13 gesetzt. Dieser Einsatz 60 weist jedoch Vertiefungen 61 auf, die den Nietkopf 8 aufnehmen, wodurch insgesamt die Niete zum Inneren der Tragschale 5 hin verdecktsind. Die flache, geschlossene Seite 62 des Einsatzes 60 bildet hier die Führungsfläche 20, die ein Verhaken oder Verkanten der Planlatte beim Einsetzen oder Heraussetzen verhindert.

### Bezugszeichenllste

- 1: Fahrzeugchassis
- 2: Ladeboden
- 3: Profilstütze, Runge
- 4: Dächaufbau
- 5: Tragschale
- 6: Latte (Planlatte)
- 6a: Stirnfläche der Latte
- 7: Seitenfläche
- 8: Nietkopf
- 9: Niet
- 10: Boden
- 10a: Bodenhälfte
- 10b: Bodenhälfte
- 11: Seitenwand
- 12: Seitenwand
- 13: Befestigungswand
- 14a: Öffnung
- 14b: Öffnung
- 14c: Öffnung
- 14d: Öffnung
- 15: Öffnung
- 17: Stützfläche
- 20: Führungsfläche
- 21: Teilfläche
- 22: Teilfläche
- 23: Teilfläche
- 25: Bereich
- 26: Überlappungsbereich
- 27: Bereich
- 28: Bereich
- 30: Verformung
- 31: Verformung
- 40: Vertiefung
- 50: Einsatz
- 51: Vertiefung
- 60: Einsatz
- 61: Vertiefung
- 62: Fläche

## Patentansprüche

1. Lattenhalterung für Nutzfahrzeugaufbauten mit einer das Ende einer Latte (6) aufnehmenden, nach oben hin offenen Tragschale (5) bestehend zumindest aus einem Boden (10), nach fahrzeuginnen und fahrzeugaußen weisenden Seitenwänden (11,12) sowie einer der Stirnfläche (6a) der Latte (6) gegenüberliegenden, gegen eine vertikale Profilstütze (3) des Fahrzeugaufbaus vernietete oder verschraubte Befestigungswand (13), wobei die Tragschale (5) einschließlich der Befestigungswand (13) ein einstückiges Blechformteil ist, und sich die Schraube bzw. das Niet (9) gegen eine Stützfläche (17) innen an der Befestigungswand (13) abstützt,
**gekennzeichnet durch**
eine in Höhe der Schraube bzw. des Niets (9) oder höher zwischen den beiden Seitenwänden (11,12) angeordnete Führungsfläche (20), welche
- einstückiger Bestandteil der Befestigungswand (13) ist,
- an dem Blechformteil **durch** Umformung ausgebildet ist,
- der Stirnfläche (6a) der Latte (6) gegenüberliegt,
- im Vergleich zur Stützfläche (17) zu der Stirnfläche (6a) hin vorspringt.

2. Lattenhalterung nach Anspruch 1, **dadurch gekennzeichnet, dass** sich die Führungsfläche (20) aus Teilflächen (21, 22, 23) zusammensetzt, die in unterschiedlicher Höhe angeordnet sind.

3. Lattenhalterung nach Anspruch 2, **dadurch gekennzeichnet, dass** mindestens eine Teilfläche (22) zwischen der Schraube bzw. dem Niet (9) und der fahrzeuginneren Seitenwand (11), und mindestens eine weitere Teilfläche (21) zwischen der Schraube bzw. dem Niet (9) und der fahrzeugäußeren Seitenwand (12) angeordnet ist.

4. Lattenhalterung nach Anspruch 2 oder 3, **dadurch gekennzeichnet, dass** sich die in unterschiedlichen Höhen angeordneten Teilflächen höhenmäßig überlappen.

5. Lattenhalterung nach einem der Ansprüche 2 bis 4, **dadurch gekennzeichnet, dass** sich die Führungsfläche (20) aus insgesamt drei Teilflächen (21, 22, 23) zusammensetzt, von denen sich die erste Teilfläche (21) entlang der einen Seitenwand (12), und die zweite und dritte Teilfläche (22, 23) entlang der zweiten Seitenwand (11) erstrecken, wobei sich die zweite Teilfläche (22) überwiegend in einer Höhe oberhalb, und die dritte Teilfläche (23) überwiegend in einer Höhe unterhalb der Höhe der ersten Teilfläche (21) befindet.

6. Lattenhalterung nach Anspruch 1, **dadurch gekennzeichnet, dass** die Führungsfläche (20) an einem innen an der Befestigungswand (13) angeordneten flachen Einsatz (50, 60) ausgebildet ist.

7. Lattenhalterung nach Anspruch 6, **dadurch gekennzeichnet, dass** der Einsatz (50) mit einer zu einer Öffnung (14a, 14b, 14c, 14d, 15) für die Schraube bzw. das Niet in der Befestigungswand (13) fluchtenden Öffnung versehen ist, und dass die Stützfläche (17) an einer die Öffnung umgebenden Vertiefung (51) in dem Einsatz (50) ausgebildet ist.

## Claims

1. A slat holding means for utility vehicle superstructures with a carrier shell (5) receiving the end of a slat (6) and open towards the top and comprising at least a base (10), side walls (11, 12) directed towards the interior and exterior of the vehicle, and a fastening wall (13) opposite the front face (6a) of the slat (6) and riveted or bolted to a vertical profile support (3) of the vehicle superstructure, wherein the carrier shell (5) including the fastening wall (13) is a one-piece moulded sheet metal part, and the bolt or the rivet (9) is supported internally on the fastening wall (13) against a support face (17), **characterized by** a guide face (20) which is arranged at the level of the bolt or the rivet (9) or at a higher level between the two side walls (11, 12) and which guide face
- is a one-piece component part of the fastening wall (13),
- is produced by shaping on the moulded sheet metal part,
- is opposite the front face (6a) of the slat (6),
- projects towards the front face (6a) as compared with the support face (17).

2. A slat holding means according to Claim 1, **characterized in that** the guide face (20) is formed from partial faces (21, 22, 23) which are arranged at different levels.

3. A slat holding means according to Claim 2, **characterized in that** at least one partial face (22) is arranged between the bolt or the rivet (9) and the side wall (11) towards the interior of the vehicle, and at least one further partial face (21) is arranged between the bolt or the rivet (9) and the side wall (12) towards the exterior of the vehicle.

4. A slat holding means according to Claim 2 or 3, **characterized in that** the partial faces arranged at different levels overlap vertically.

5. A slat holding means according to any one of Claims 2 to 4, **characterized in that** the guide face (20) is formed from altogether three partial faces (21, 22, 23), of which the first partial face (21) extends along one side wall (12) and the second and third partial faces (22, 23) extend along the second side wall (11), wherein the second partial face (22) is situated for the most part at a level above and the third partial face (23) is situated for the most part at a level below the level of the first partial face (21).

6. A slat holding means according to Claim 1, **characterized in that** the guide face (20) is formed on a flat insert (50, 60) arranged on the inside of the fastening wall (13).

7. A slat holding means according to Claim 6, **characterized in that** the insert (50) is provided with an opening in alignment with an opening (14a, 14b, 14c, 14d, 15) for the bolt or the rivet in the fastening wall (13), and the support face (17) is formed on a depression (51) - surrounding the opening - in the insert (50).

## Revendications

1. Support de lattes pour des structures de véhicules utilitaires avec une coque de support (5) ouverte vers le haut logeant l'extrémité d'une latte (6), constitué d'au moins un fond (10), de parois latérales orientées vers l'intérieur et vers l'extérieur du véhicule (11, 12) ainsi que d'une paroi de fixation (13) opposée à une des faces frontales (6a) de la latte (6), rivetée ou vissée contre un montant profilé vertical (3) de la structure du véhicule, dans lequel la coque de support (5) y compris la paroi de fixation (13) est une partie façonnée en tôle en une seule pièce, et la vis ou le rivet (9) s'appuie contre une surface d'appui (17) à l'intérieur sur la paroi de fixation (13), **caractérisé par** une surface de guidage (20) disposée à la hauteur de la vis ou du rivet (9) ou plus haut entre les deux parois latérales (11, 12), qui
- fait partie intégrante de la paroi de fixation (13),
- est réalisée par formage sur la partie façonnée en tôle,
- fait face à la face frontale (6a) de la latte (6),
- dépasse par rapport à la surface d'appui (17) de la face frontale (6a).

2. Support de lattes selon la revendication 1, **caractérisé en ce que** la surface de guidage (20) est constituée de surfaces partielles (21, 22, 23) disposées à des hauteurs différentes.

3. Support de lattes selon la revendication 2, **caractérisé en ce qu'**au moins une surface partielle (22) se trouve entre la vis ou le rivet (9) et la paroi latérale située à l'intérieur du véhicule (11) et au moins une surface partielle (21) se trouve entre la vis ou le rivet (9) et la paroi latérale située à l'extérieur du véhicule (12).

4. Support de lattes selon la revendication 2 ou 3, **caractérisé en ce que** les surfaces partielles disposées à différentes hauteurs se chevauchent en hauteur.

5. Support de lattes selon l'une des revendications 2 à 4, **caractérisé en ce que** la surface de guidage (20) est constituée au total de trois surfaces partielles (21, 22, 23), la première surface partielle (21) s'étendant le long d'une paroi latérale (12) et la deuxième et la troisième surfaces partielles (22, 23) s'étendant le long de la deuxième paroi latérale (11), moyennant quoi la deuxième surface partielle (22) se trouve principalement à une hauteur au-dessus, et la troisième surface partielle (23) principalement à une hauteur en dessous de la première surface partielle (21).

6. Support de lattes selon la revendication 1, **caractérisé en ce que** la surface de guidage (20) est réalisée sur un insert plat (50, 60) disposé à l'intérieur de la paroi de fixation (13).

7. Support de lattes selon la revendication 6, **caractérisé en ce que** l'insert (50) est muni d'une ouverture alignée avec une ouverture (14a, 14b, 14c, 14d, 15) pour la vis ou le rivet dans la paroi de fixation (13) et **en ce que** la surface d'appui (17) est réalisée sur un évidement (51) entourant l'ouverture dans l'insert (50).
